Europäisches Patentamt

European Patent Office

Office européen des brevets

(11) Veröffentlichungsnummer: **0 461 465 A1**

# EUROPÄISCHE PATENTANMELDUNG

(21) Anmeldenummer: 91108715.3

(22) Anmeldetag: 28.05.91

(51) Int. Cl.⁵: **F16B 39/22**, F16B 37/04, B62L 1/00

(30) Priorität: 13.06.90 DE 4018957

(43) Veröffentlichungstag der Anmeldung:
18.12.91 Patentblatt 91/51

(84) Benannte Vertragsstaaten:
AT BE CH DE ES FR GB IT LI LU NL

(71) Anmelder: LOOK S.A.
Rue de la Pique B.P. 72
F-58004 Nevers Cédex(FR)

(72) Erfinder: Couturet, Jean-Pierre
57 Parc de Marzy, Bat A, Esc. 1
F-58000 Nevers(FR)

Erfinder: Chrétien, Jean-Claude
7 Rue Jules Verne
F-58000 Nevers(FR)
Erfinder: Van Raemdonck, Joris
95, Parklaan
B-2768 Bazel(BE)

(74) Vertreter: Dipl.-Phys.Dr. Manitz
Dipl.-Ing.Dipl.-Wirtsch.-Ing. Finsterwald
Dipl.-Phys. Rotermund Dipl.-Chem.Dr. Heyn
B.Sc.(Phys.) Morgan
Robert-Koch-Strasse 1
W-8000 München 22(DE)

(54) Vorrichtung zur Befestigung von aktiven und/oder passiven Elementen an der Wandung von Komposit-Bauteilen.

(57) Eine Vorrichtung zur Befestigung von Elementen an der Wandung von Komposit-Bauteilen (2) weist eine eine Öffnung (20) des Komposit-Bauteils durchgreifende Halterung (3, 5) auf. Die Halterung besteht dabei aus einem an der schwerer zugänglichen Seite des Komposit-Bauteils gelegenen Kupplungsteil (3) sowie einem auf der leichter zugänglichen Seite des Komposit-Bauteils gelegenen Betätigungsteil (5). Das Betätigungsteil (5) und das Kupplungsteil (3) sind zur Aufbringung einer Drehbewegung vom Betätigungsteil (5) auf das Kupplungsteil (3) miteinander in Eingriff bringbar. Das Kupplungsteil (3) ist mit einem das Betätigungsteil (5) durchgreifenden Kupplungsgegenstück (4) des anzubringenden Elements (1) unter gegenseitiger Verdrehung und axialer Verspannung von Kupplungsteil (3), Wandung (21), Betätigungsteil (5) und Element (1) kuppelbar.

Fig. 2

Die Erfindung betrifft eine Vorrichtung zur Befestigung von aktiven und / oder passiven Elementen an der Wandung von Komposit-Bauteilen, insbesondere an Fahrzeugen, wie Zweirädern mit Komposit-Rahmen.

Bei Komposit-Bauteilen, wie beispielsweise Komposit- oder Monoblock-Rahmen von Zweirädern besteht das Problem, daß zur Befestigung von an diesen Bauteilen anzubringenden Elementen keine Löcher gebohrt werden können. Diese Komposit-Bauteile bestehen aus Gewebe- und Faserlagen sowie Kunststoff, beispielsweise Kunstharz. Diese Komposit-Bauteile, die auf hohe Festigkeit bei geringem Gewicht und geringem Materialeinsatz ausgelegt sind, würden durch das nachträgliche Bohren von Befestigungslöchern in ihrer Struktur derart geschädigt, daß von diesen gebohrten Befestigungslöchern Risse ausgehen können, die schnell zur Zerstörung des gesamten Bauteils führen können. Daher können Befestigungslöcher nur bei der Herstellung des Komposit-Bauteils vorgesehen werden.

Häufig sind derartige Befestigungsöffnungen nicht ohne weiteres von beiden Seiten zugänglich, so daß beispielsweise das Anschrauben von anzubringenden Elementen auf herkömmliche Weise äußerst schwierig wenn nicht gar unmöglich ist, da ein Werkzeug zum Gegenhalten beispielsweise einer Befestigungsmutter häufig nicht an den schwer zugänglichen Lageort der Befestigungsmutter gebracht werden kann. Dieses Problem besteht insbesondere bei schmalen, aerodynamisch geformten Fahrradrahmen, an die beispielsweise Bremsen angeschraubt werden müssen.

Es ist daher die Aufgabe der vorliegenden Erfindung, eine Vorrichtung der eingangs genannten Gattung zu schaffen, die die Befestigung von aktiven bzw. passiven Elementen an Komposit-Bauteilen gestattet, ohne eine Schwächung dieser Bauteile herbeizuführen, und die auch das Anbringen derartiger Elemente an für herkömmliche Befestigungsvorrichtungen schwer zugänglichen Stellen erlaubt.

Diese Aufgabe wird nach der Erfindung dadurch gelöst, daß am Komposit-Bauteil eine eine Öffnung in der Wandung des Komposit-Bauteils durchgreifende Halterung vorgesehen ist, die ein auf der einen, schwer zugänglichen Seite des Komposit-Bauteils gelegenes Kupplungsteil sowie auf der anderen Seite des Komposit-Bauteils gelegenes Betätigungsteil aufweist, das zur Aufbringung einer Drehbewegung auf das Kupplungsteil mit diesem in Eingriff bringbar ist und daß das Kupplungsteil mit einem das Betätigungsteil durchgreifenden Kupplungsgegenstück des Elements unter gegenseitiger Verdrehung und axialer Verspannung von Kupplungsteil, Wandung, Betätigungsteil und Element kuppelbar ist.

Durch das Vorsehen einer derartig ausgestalteten Halterung kann das schwer zugängliche Kupplungsteil auf einfache Weise mittels des auf der leicht zugänglichen Seite befindlichen Betätigungsteils verdreht werden, so daß eine dreh- und axialfeste Verbindung zwischen dem anzubringenden Element und dem Komposit-Bauteil entsteht, wobei das Betätigungsteil zu einem Teil der Verbindung wird.

Eine besonders vorteilhafte Ausgestaltung von Kupplungsteil und Betätigungsteil ist in Anspruch 2 angegeben. Die an einem zylindrischen Ansatz vorgesehenen Kuppelelemente, die insbesondere nach Anspruch 3 von sich axial erstreckenden Klauen gebildet sein können, können sich in dieser Ausbildung nicht nur problemlos in der Öffnung der Wandung des Komposit-Bauteils drehen, sondern der zylindrische Ansatz beider Teile sorgt gleichzeitig für eine gute radiale und axiale Führung beider Teile in der Öffnung der Wandung des Komposit-Bauteils.

Bei der Ausbildung nach Anspruch 4 ist vorteilhaft, daß das Kupplungsteil und das Betätigungsteil nach dem Einsetzen in die Öffnung axial miteinander verbunden werden können, beispielsweise durch gegenseitiges Verclipsen im Bereich der Kuppelelemente. Auf diese Weise kann die Halterung bereits unverlierbar in die Öffnung der Wandung eingesetzt werden, ohne daß gleichzeitig die Montage des anzubringenden Elements erfolgen muß. Es ist aber auch denkbar, daß lediglich das Kupplungsteil von der schwer zugänglichen Seite in die Öffnung eingedrückt und dort über Reibungskraft oder auch mittels axial wirkender und radial freigängiger Rastelemente gehalten wird. Das Aufsetzen des Betätigungsteils erfolgt in diesem Fall erst beim Befestigen des anzubringenden Elements.

Besonders vorteilhafte Ausgestaltungen der Kupplungsverbindung zwischen dem Kupplungsteil und dem anzubringenden Element sind in den Ansprüchen 5 und 6 angegeben. Sowohl die Schraubverbindung nach Anspruch 5 als auch die Bajonettverbindung nach Anspruch 6 schaffen eine zuverlässig haltbare Befestigung des Elements am Komposit-Bauteil, wobei die Befestigung nach Anspruch 6 besonders schnell durchführbar ist.

Das Vorsehen von besonderen Anlageflächen nach Anspruch 7 an den Trennflächen der axial verspannten Teile schafft nicht nur eine gegen selbsttätiges Lösen besonders gut wirksame hohe Reibungsfläche sondern darüber hinaus eine große Abstützfläche der einzelnen Teile aneinander, was insbesondere für die Abstützung der über das anzubringende Element auf das Komposit-Bauteil zu übertragenden Kräfte an der Wandung des Komposit-Bauteils vorteilhaft ist. Zur erhöhten Wirksamkeit können diese Anlageflächen nach Anspruch 8 mit einer Oberfläche von erhöhtem Reibungskoeffizienten versehen sein.

Nach Anspruch 9 ist es vorteilhaft, am Außenumfang des Betätigungsteils eine Kraftaufbringungsfläche vorzusehen, da dort der Hebelarm für die Betätigung am größten ist und so die durch die Anlageflächen hervorgerufenen Reibungen, die der Selbsthaltung der gesamten Verbindung dienen, aber während des Verdrehens der Betätigungsvorrichtung hinderlich sein können, wirksam überwunden werden können.

Die Ausbildungen nach den Ansprüchen 10, 11 und 12 betreffen vorteilhafte Ausbildungen der Kraftaufbringungsfläche, wobei die Ausbildungen der Ansprüche 11 und 12 besonders vorteilhaft auch ohne Werkzeug betätigbar sind.

Die Erfindung wird nachfolgend anhand der Zeichnung näher erläutert; in dieser zeigt:

Figur 1 einen Teil eines aus einem Komposit-Material bestehenden Monoblock-Fahrradrahmens mit angedeutetem Hinterrad,

Figur 2 eine perspektivische Ansicht einer Vorrichtung nach der Erfindung,

Figur 3 eine Schnittansicht der Vorrichtung und

Figur 4 eine Montageskizze.

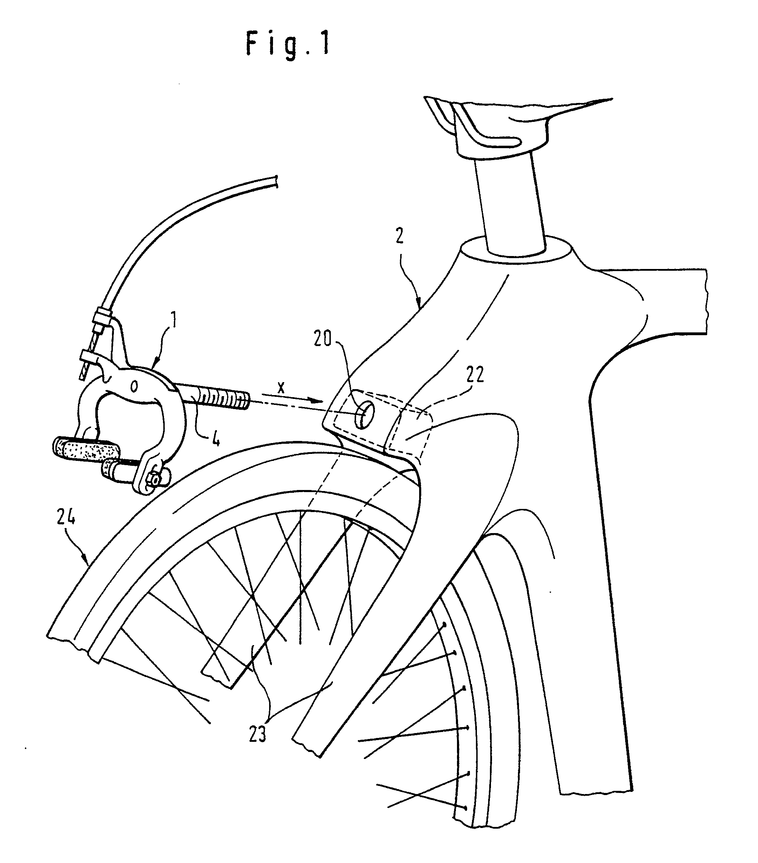

In Figur 1 ist eine perspektivische Ansicht eines Ausschnitts eines aus einem Monobloc-Rahmen aus Komposit-Material gefertigten Fahrradrahmens (Komposit-Bauteil) 2 mit einer im Bereich des Rahmenansatzes der hinteren Rahmengabel 23 vorgesehenen Befestigungsöffnung 20 dargestellt. Die Befestigungsöffnung 20 mündet in einen nur von unten (vom Hinterrad 24 aus) zugänglichen Hohlraum 22. Weiterhin ist in Figur 1 eine Felgenbremse (anzubringendes Element) 1 dargestellt, die mit einem Befestigungsbolzen (Kupplungsgegenstück) 4 gleichachsig mit der Befestigungsöffnung 20 ausgerichtet ist.

Der Pfeil X deutet an, daß die Felgenbremse 1 mit dem Befestigungsbolzen 4 in die Öffnung 20 gesteckt und dort befestigt werden soll. Der Zugriff zum gestrichelt dargestellten Hohlraum 22 im Rahmen 2 zum Einführen und Festschrauben einer Befestigungsmutter ist durch das Hinterrad soweit verdeckt, daß das Einführen eines Werkzeugs in den Hohlraum 22 zumindest bei montiertem Hinterrad nicht möglich ist.

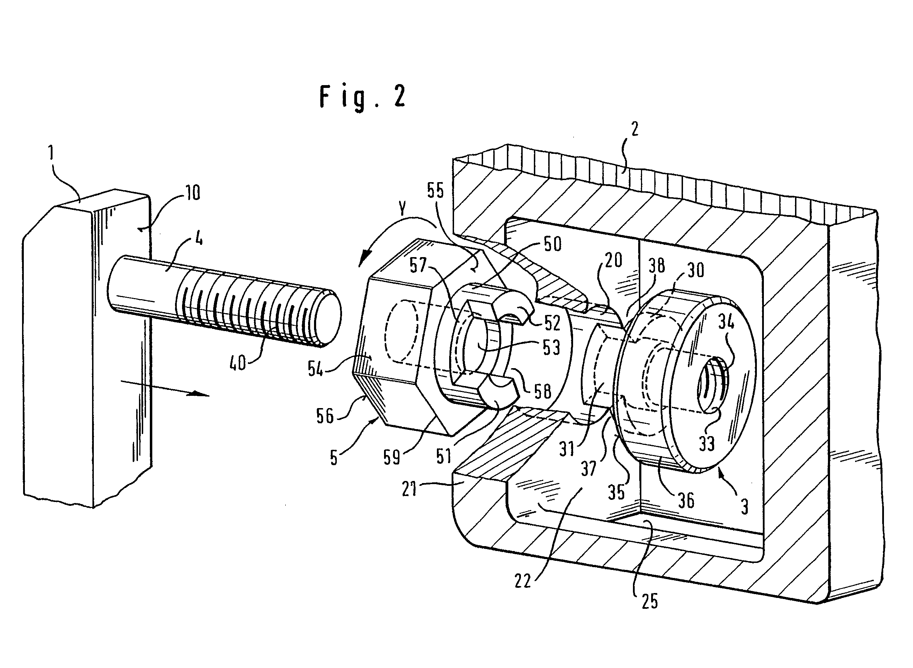

Figur 2 zeigt den Hohlraum 22 des als Komposit-Bauteil hergestellten Rahmens 2 mit der Befestigungsöffnung 20 in der hinteren Wandung 21, wobei der Hohlraum 22 teilweise aufgeschnitten dargestellt ist.

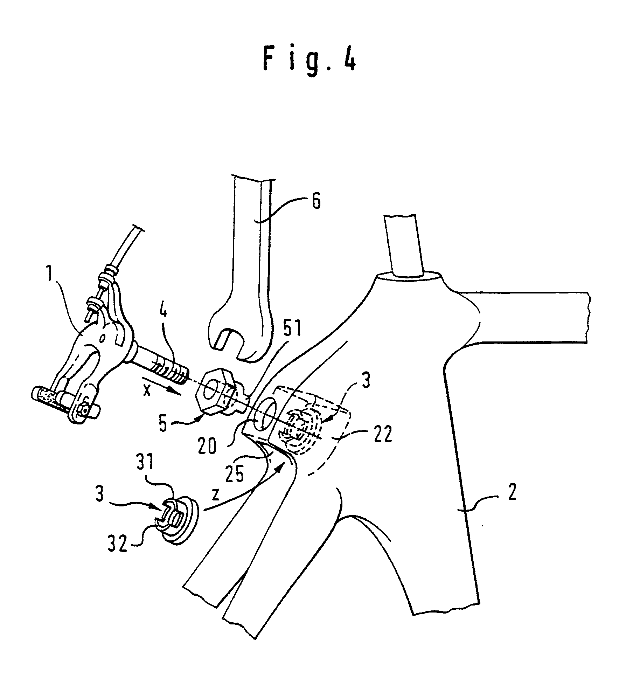

Von der Innenseite des Hohlraums 22 ist ein Kupplungsteil 3 mit einem zylindrischen Ansatz 30 im wesentlichen paßgenau aber drehbar in die Befestigungsöffnung 20 einsetzbar gezeigt. Das Kupplungsteil 3 kann von unten durch die gestrichelt gezeichnete große Öffnung 25 in den Hohlraum 22 eingebracht werden (Pfeil Z in Figur 4).

An den zylindrischen Ansatz 30 des Kupplungsteils 3 schließt sich zur Mitte des Hohlraums 22 hin ein Abschnitt 36 größeren Durchmessers an. Der Übergang vom zylindrischen Ansatz 30 zum Abschnitt 36 größeren Durchmessers wird unter Ausbildung einer sich radial erstreckenden Fläche 35 von einer Stufe gebildet.

Das Kupplungsteil 3 ist mit einer Axialbohrung 33 versehen, die ein Gewinde 34 aufweist. Am zur Öffnung 20 weisenden Ende des Kupplungsteils 3 erstrecken sich vom zylindrischen Ansatz 30 ausgehend in axialer Richtung zwei Klauen 31, 32, deren Außenumfang dem des zylindrischen Ansatzes 30 entspricht.

Die Klauen 31, 32 sind zum Eingriff in komplementär ausgebildete Aussparungen 57, 58 am zur Öffnung 20 weisenden Ende des zylindrischen Ansatzes 50 des Betätigungsteiles 5 ausgebildet.

Das Betätigungsteil 5 wird dabei von der Außenseite in die Öffnung 20 eingesetzt, wobei die in gleicher Weise wie am Kupplungsteil 3 ausgebildeten Klauen 51, 52 in komplementäre Aussparungen 37, 38 des Kupplungsteils 3 eingreifen. Auf diese Weise entsteht eine drehfeste Kupplung des Kupplungsteils 3 mit dem Betätigungsteil 5.

Das Betätigungsteil 5 besitzt eine Axialbohrung 53, deren Durchmesser geringfügig größer ist als der Durchmesser der Axialbohrung 33 im Kupplungsteil 3, so daß ein mit einem zum Gewinde 34 des Kupplungsteils 3 passenden Gewinde 40 ausgerüstetes Kupplungsgegenstück (Befestigungsbolzen 4) an einem am Komposit-Bauteil (Rahmen 2) anzubringenden Element (Felgenbremse 1) frei durch die Axialbohrung 53 führbar ist.

Das Betätigungsteil 5 geht unter Ausbildung einer Stufe mit einer sich radial erstreckenden Anlagefläche 55 in einen außen liegenden Abschnitt 59 größeren Durchmessers über, der an seiner Umfangsfläche 54 zum Ansetzen eines Schraubenschlüssels 6 sechseckig ausgebildet ist.

Die axiale Erstreckung der zylindrischen Ansätze 30 und 50 sowie der sich aus ihnen axial erstreckenden Kupplungsklauen 31, 32; 51, 52 ist im eingekuppelten Zustand von Kupplungsteil 3 und Betätigungsteil 5 gleich oder geringfügig kleiner als die Dicke der Wandung 21 im Bereich der Öffnung 20, so daß die Klauen 31, 32; 51, 52 zwar ausreichend tief in die komplementären Aussparungen 57, 58; 37, 38 eingreifen können, ohne daß jedoch die Stirnseite der jeweiligen Klaue 51, 52; 31, 32 den Grund der zugehörigen Aussparung 37, 38; 57, 58 berührt.

Auf diese Weise ist gewährleistet, daß im eingekuppelten Zustand sowohl die sich radial erstrek-

kende Anlagefläche 35 des Kupplungsteils 3 als auch die sich radial erstreckende Anlagefläche 55 des Bedienteils 5 an der Innen- bzw. Außenfläche der Wandung 21 anliegen können.

Nachdem das Kupplungsteil 3 und das Bedienteil 5 in der vorbeschriebenen Weise die Öffnung 20 durchgreifend zusammengefügt worden sind, wird der mit dem Gewinde 40 versehene zylindrische Befestigungsbolzen 4 der Felgenbremse 1 durch die axiale Bohrung 53 des Betätigungsteils 5 von außen hindurchgesteckt und an das Innengewinde 34 im Kupplungsteil 3 herangeführt. Daraufhin wird das Betätigungsteil 5 in Richtung des Pfeiles Y gedreht.

Über die vorbeschriebene Kupplungsverbindung wird diese Drehbewegung auf das Kupplungsteil 3 übertragen, so daß sich das Innengewinde 34 auf das Außengewinde 40 schraubt. Dabei stützt sich das Kupplungsteil 3 mit seiner sich radial erstreckenden Anlagefläche 35 an der Innenseite der Wandung 21 ab und zieht den Befestigungsbolzen 4 mit der daran angebrachten Felgenbremse 1 in den Hohlraum 22 hinein, bis das Element 1 mit seiner dem Kompositbauteil 2 zugewandten stirnseitigen Anlagefläche 10 an der äußeren Anlagefläche 56 des Betätigungsteils 5 zur Anlage kommt. Eine weitere Drehbewegung des Betätigungsteils 5 in Richtung des Pfeiles Y zieht nun auch das Betätigungsteil 5 mit seiner inneren Anlagefläche 55 gegen die Außenseite der Wandung 21, so daß jegliches Axialspiel zwischen dem Kupplungsteil 3, der Wandung 21, dem Betätigungsteil 5 und der Felgenbremse 1 aufgehoben ist.

Die auf diese Weise zusammengespannten vorgenannten Teile erzeugen an den einander berührenden Anlageflächen eine ausreichende Reibung, so daß auch ein weiteres Verdrehen der vorgenannten Teile relativ zueinander weitgehend verhindert ist.

Auf diese Weise ist die Felgenbremse 1 sicher am Fahrradrahmen 2 befestigt und sowohl gegen axiales Verschieben als auch gegen Verdrehen gesichert.

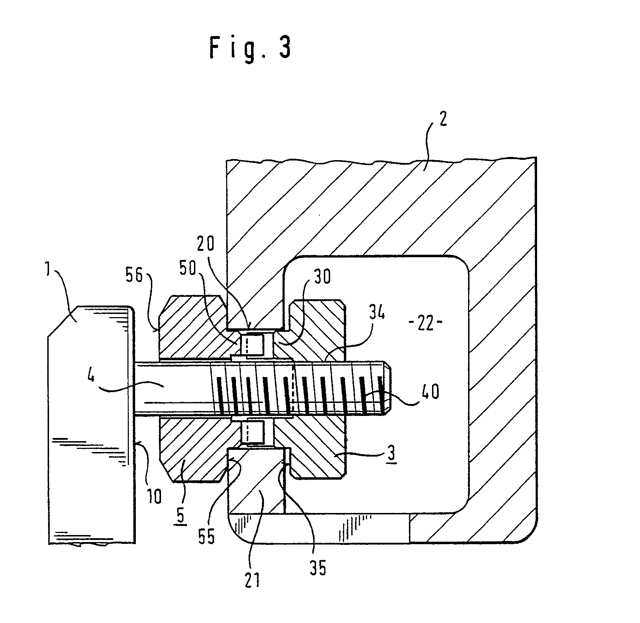

Figur 3 zeigt nochmals die vorstehend beschriebene Verbindung in einem Zustand kurz vor dem Erreichen der endgültig befestigten Lage der Felgenbremse 1. Es sind deutlich das noch vorhandene Axialspiel zwischen der Anlagefläche 10 der Felgenbremse 1 und der äußeren Anlagefläche 56 des Betätigungsteils 5 sowie der axiale Abstand zwischen der Wandung 21 und dem Kupplungsteil 3 zu erkennen. Es ist weiterhin in dieser Schnittzeichnung zu erkennen, daß der Abstand zwischen den ineinandergreifenden Kupplungsklauen zum Grund der zugehörigen komplementären Aussparung größer ist als der verbleibende Spalt zwischen dem Kupplungsteil 3 und der Wandung 21, so daß bei maximal eingedrehtem Gewinde 40, 34 sowohl die innere Anlagefläche 55 des Betätigungsteils 5 als auch die Anlagefläche 35 des Kupplungsteils 3 fest zur Anlage an die Wandung 21 geraten und diese zwischen sich einklemmen können.

Weiterhin ist die radiale Führung der zylindrischen Ansätze 30 und 50 innerhalb der Öffnung 20 zu erkennen, die eine Radialbewegung der in die Öffnung 20 eingesetzten Halterung 3, 5 verhindert.

Figur 4 zeigt eine auseinandergezogene Darstellung der miteinander zu montierenden Teile der Vorrichtung, wobei die innerhalb des schwer zugänglichen Hohlraums 22 einzunehmende Stellung des Kupplungsteils 3 gestrichelt gezeichnet ist. Der im Zusammenhang mit Figur 2 bereits beschriebene Zusammenbau der Vorrichtung wird anhand dieser Figur nochmals verdeutlicht, wobei das Ansetzen des Werkzeugs 6 am Kupplungsstück 5 gezeigt ist. Auf diese Weise wird besonders deutlich, daß die am Rahmen 2 anzubringende Felgenbremse 1 mittels des über das außenliegende Kupplungsstück 5 von außen betätigten Kupplungsstücks 3 und ihres Befestigungsbolzens 4 am Rahmen 2 einfach verschraubt wird.

## Patentansprüche

1. Vorrichtung zur Befestigung von aktiven und / oder passiven Elementen an der Wandung von Komposit-Bauteilen, insbesondere an Fahrzeugen, wie Zweirädern mit Komposit-Rahmen, dadurch **gekennzeichnet,** daß am Komposit-Bauteil (2) eine eine Öffnung (20) in der Wandung (21) des Komposit-Bauteils (2) durchgreifende Halterung (3, 5) vorgesehen ist, die ein auf der einen, schwer zugänglichen Seite des Komposit-Bauteils (2) gelegenes Kupplungsteil (3) sowie ein auf der anderen Seite des Komposit-Bauteils (2) gelegenes Betätigungsteil (5) aufweist, das zur Aufbringung einer Drehbewegung auf das Kupplungsteil (3) mit diesem in Eingriff bringbar ist und daß das Kupplungsteil (3) mit einem das Betätigungsteil (5) durchgreifenden Kupplungsgegenstück (4) des Elements (1) unter gegenseitiger Verdrehung und axialer Verspannung von Kupplungsteil (3), Wandung (21), Betätigungsteil (5) und Element (1) kuppelbar ist.

2. Vorrichtung nach Anspruch 1, dadurch **gekennzeichnet,** daß das Kupplungsteil (3) einen in die Öffnung (20) einsetzbaren und mit Kuppelelementen (31, 32) versehenen zylindrischen Ansatz (30) aufweist und daß das Betätigungsteil (5) einen in die Öffnung (20) einsetzbaren und mit angepaßten Kuppelelementen (51, 52) versehen

zylindrischen Ansatz (50) aufweist.

3. Vorrichtung nach Anspruch 2,
dadurch **gekennzeichnet,**
daß die Kuppelemente (31, 32; 51, 52) von sich axial erstreckenden Klauen gebildet sind.

4. Vorrichtung nach einem der Ansprüche 1 bis 3,
dadurch **gekennzeichnet,**
daß das Kupplungsteil (3) und das Betätigungsteil (5) axial miteinander verbindbar sind.

5. Vorrichtung nach einem der vorhergehenden Ansprüche,
dadurch **gekennzeichnet,**
daß das Kupplungsteil (3) eine mit einem Gewinde (34) versehene Axialbohrung (33) aufweist,
daß das Betätigungsteil (5) eine Axialbohrung (53) größeren Durchmessers als die des Kupplungsteils (3) aufweist, und
daß das Kupplungsgegenstück (4) mit einem an das Gewinde (34) im Kupplungsteil (3) angepaßten Gewinde (40) versehen ist.

6. Vorrichtung nach einem der Ansprüche 1 bis 4,
dadurch **gekennzeichnet,**
daß das Betätigungsteil (5) und das Kupplungsteil (3) jeweils eine Axialbohrung (53, 33) aufweisen,
daß das Kupplungsgegenstück (4) zylindrisch ausgebildet ist und die Axialbohrungen (53, 33) im Betätigungsteil (5) und im Kupplungsteil (3) durchdringen kann und daß das Kupplungsteil (3) und das Kupplungsgegenstück (4) als ineinandergreifende Bajonettverbindung ausgebildet sind.

7. Vorrichtung nach einem der vorhergehenden Ansprüche,
dadurch **gekennzeichnet,**
daß das Kupplungsteil (3) sowie das Betätigungsteil (5) jeweils an ihren der Wandung (21) zugewandten Seiten mit Anlageflächen (35, 55) zur Anlage an die Wandung (21) ausgebildet sind und
daß das Betätigungsteil (5) an seiner von der Wandung (21) abgewandten Stirnseite eine weitere Anlagefläche (56) für eine Anlagefläche (10) des Elements (1) aufweist.

8. Vorrichtung nach Anspruch 7,
dadurch **gekennzeichnet,**
daß die Anlageflächen (35, 55; 56; 10) und die Wandung (21) im Anlagebereich einen erhöhten Reibungskoeffizienten aufweisen.

9. Vorrichtung nach einem der vorhergehenden Ansprüche,
dadurch **gekennzeichnet,**
daß das Betätigungsteil an seinem axial außerhalb der Öffnung (20) gelegenen Außenumfang mit einer Kraftaufbringungsfläche (54) versehen ist.

10. Vorrichtung nach Anspruch 9,
dadurch **gekennzeichnet,**
daß die Kraftaufbringungsfläche (54) als Mehrkant zum Ansetzen eines Werkzeugs, als gerändelte Oberfläche oder in Form einer Flügelmutter zum Ansetzen eines Werkzeugs ausgebildet ist.

# Fig.1

Fig. 2

# Fig. 3

# Fig. 4

| EINSCHLÄGIGE DOKUMENTE | | | EP 91108715.3 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int Cl.⁴)** |
| A | US - A - 4 952 107 (DUPREE) * Zusammenfassung * | 1,2,4, 6 | F 16 B 39/22 F 16 B 37/04 B 62 L 1/00 |
| A | FR - A - 2 462 605 (SOCIETE D'ETUDE ET DE CON- STRUCTION DE MOTEURS D'AVIATION) * Fig. 1 * | 1,2,4, 5,6,7 | |
| A | DE - A - 2 019 955 (SHUR-LOK CORP.) * Fig. 1 * | 1,2,4, 6 | |
| A | US - A - 4 064 972 (OHTARI et al.) * Zusammenfassung * | 1 | |
| | | | **RECHERCHIERTE SACHGEBIETE (Int. Cl.⁴)** |
| | | | B 62 K 19/00 B 62 L 1/00 B 62 L 3/00 F 16 B 2/00 F 16 B 5/00 F 16 B 35/00 F 16 B 37/00 F 16 B 39/00 |

Der vorliegende Recherchenbericht wurde für alle Patentansprüche erstellt.

| Recherchenort | Abschlußdatum der Recherche | Prüfer |
|---|---|---|
| WIEN | 30-07-1991 | RIEMANN |